# EUROPEAN PATENT APPLICATION

(11) **EP 0 870 655 A1**
(43) Date of publication of application: **14.10.1998**
(21) Application number: 98301585.0
(22) Date of filing: 04.03.1998
(51) Int. Cl.: B60R 25/00, B29C 33/14

(54) **Holographic marking of transparent surfaces of automobile lamps and headlights**

(30) Priority: 05.03.1997 CZ 66797
(71) Applicant: AUTOPAL S.R.O., CZ-741 11 Novy Jicin (CZ)
(72) Inventor: Cejnek, Milan, 741 01 Novy Jicin (CZ); Vejbor, Petr, 779 00 Olomouc (CZ); Tethal, Tomas, 250 68 Rez (CZ); Houha, Roman, 140 00 Praha 4 (CZ)
(74) Representative: Parry, Christopher Stephen

(57) **Abstract**

Holographic marking of transparent surfaces of automobile lamps and headlights, where the mould (1) for pressure moulding of a transparent lamp cover (6) has a carrier (3) situated in its bottom part holding a holographic matrix (2) held by said carrier (3) at the level of the surrounding mould surface part and making said hologram (4), whereby said holographic matrix (2) carrier (3) is extractable and said hologram (4) is preferably coated by a material (5) layer of a different refraction index which may be transparent or reflexive.

## Description

### Field of the Invention

The invention relates to a holographic grating technology that can be applied in marking articles made of plastics. This marking is unrepeatable whereby an unauthorised production is prevented. The scope of application of the present invention is given by the material ability from which the article or its part is produced to reproduce the fine pattern of the holographic grating in casting.

### Background of the Invention

Production of holograms or diffraction gratings consists in recording the original hologram and in a technology of its repeating. The prior art methods include optical copying, i.e. recording of an identical grating on a photosensitive or thermoplastic material or an impression of a holographic stamp on a suitable material. Without possessing such special technologies that are owned only by producers, it is not possible to produce identical holograms.

In marking products by holographic protective elements the most frequently used ones are labels or stampings of holograms on a product to be marked. A hologram is unreproducible and a holographic label is untransferable because the carrier material used is too brittle. These methods of marking belong up to now to those most reliable in protection of articles of value, banknotes, documents, products from precious metals etc. On the other side, a producer of holographic protective elements guarantees respecting of client's exclusive rights.

However, sticking of holographic labels does not solve the length of marking of such products without problems. In places of difficult access due to technology or during the product use, sticking of holographic protective marks cannot be made without problems. On the other side, such unaccessible places on product are not exposed to abrasion during the lifetime of such product.

### Summary of the Invention

The drawbacks mentioned above are removed by the method of protecting products or their parts by a hologram made by simultaneous pressure moulding of the product together with the holographic matrix. An advantage of this method of article protection consists in that in surface copying of the fine hologram relief, its optical properties are also reproduced. At the same time all graphic modifications of the holographic marking can be used. A holographic marking carried out by the pressure moulding of a transparent plastics into a product mould, comprising a holographic matrix, is conditioned by placing said holographic matrix directly into the product casting mould.

A holder or a carrier of the holographic matrix is placed in the casting mould for making product by pressure moulding and the hologram matrix is placed on its surface in such a place which continues in its surrounding. This holographic matrix carrier can be extracted from the mould and replaced by a new one or by an unworn one or by the original mould part with no hologram matrix on it.

### Brief Description of the Drawings

The invention is further illustrated with reference to the accompanying drawings, in which Figure 1 is a schematic drawing showing a pressure moulding of an article from plastics in a mould with a holographic matrix resting on the carrier surface, Figure 2 is a schematic drawing showing placement of a hologram on a transparent plastics provided with a protective transparent or reflexive layer, Figure 3 shows function of a reflexive hologram which marks a covering glass of an automobile headlight, Figure 4 illustratively shows that the rainbow colours of a holographic marking are visible from the nearby automobiles or by passing walkers.

### Examples of the Invention Embodiment

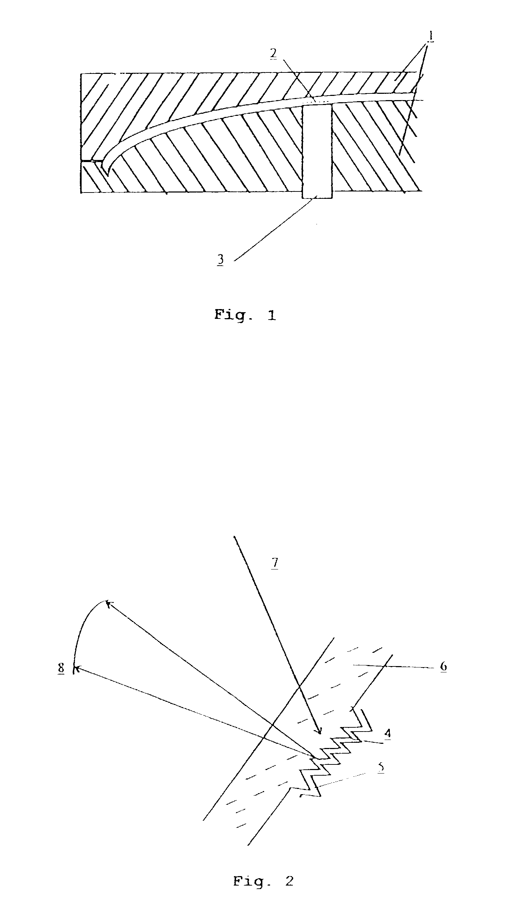

Figure 1 schematically shows a section of a mould for pressure moulding 1 of a transparent lamp 6 cover, whereby a holographic matrix 2 carrier 3 is visible in the bottom part of said lamp 6. At the level of the surrounding surface of this part of the mould the proper holographic matrix 2 is placed on the carrier surface. The surface modulation depth of the proper holographic matrix 2 makes several tenths of micrometer. Therefore, no serious mechanical properties deterioration of the moulding can be caused, e.g. by difference in cooling time. The holographic matrix 2 carrier 3 is extractable so that it can be replaced when it may be worn out after certain operation time.

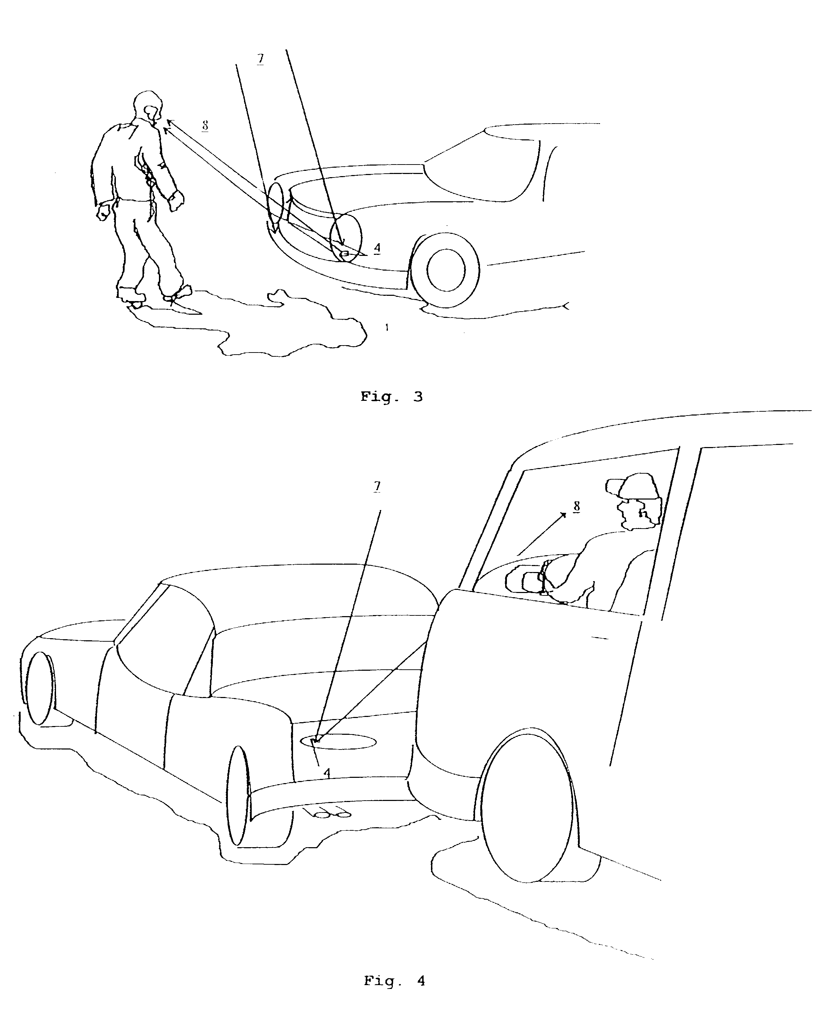

Figure 2 shows schematically placement of a hologram 4 on a transparent plastics 6 provided with a protective transparent or reflexive layer 5. The light ray 7 impinging on a hologram 4 is deflected into the angle of observation 8. The spectral colours alter in the specific, predetermined observation angle 8 of the hologram 4, what is caused by day light interference. To enhance the effects, hologram 4 can be coated with a material 5 layer of a different refraction index which may be transparent or reflexive.

### Industrial Use

The method of protecting articles or their parts by a hologram made by simultaneous pressure moulding of said article and a holographic matrix can be utilised to mark illumination articles - transparent headlight and lamp covers determined for use in motor vehicles operated on surface communications.

## Claims

1. Holographic marking of transparent surfaces of automobile lamps and headlights, characterised in that the mould (1) for pressure moulding of a transparent lamp cover (6) has a carrier (3) situated in its bottom part holding a holographic matrix (2) held by said carrier (3) at the level of surrounding mould surface part and making said hologram (4)

2. Holographic marking of transparent surfaces of automobile lamps and headlights according to claim 1, characterised in that said holographic matrix (2) carrier (3) is extractable.

3. Holographic marking of transparent surfaces of automobile lamps and headlights according to claims 1 or 2, characterised in that said hologram (4) is coated by a material (5) layer of a different refraction index which may be transparent or reflexive.
